# FASCICULE DE BREVET EUROPEEN

(11) **EP 3 685 072 B1**
(45) Date de publication et mention de la délivrance du brevet: **27.03.2024**
(21) Numéro de dépôt: 18789200.5
(22) Date de dépôt: 21.09.2018
(51) Int. Cl.: F16F 15/129

(54) **DISPOSITIF D'AMORTISSEMENT DE TORSION A DISPOSITIF DE FROTTEMENT ACTIVABLE**
TORSIONSDÄMPFERVORRICHTUNG MIT AKTIVIERBARER REIBUNGSVORRICHTUNG
TORSION DAMPING DEVICE WITH ACTIVATABLE FRICTION DEVICE

(30) Priorité: 22.09.2017 FR 1758778
(43) Date de publication de la demande: 29.07.2020
(73) Titulaire: Valeo Embrayages, 80009 Amiens (FR)
(72) Inventeur: MARECHAL, Olivier, 80009 Amiens (FR); BAGARD, Didier, 80009 Amiens (FR); BOUCHENY, Pierre, 80009 Amiens (FR); VERHOOG, Roel, 80009 Amiens (FR)
(74) Mandataire: Valeo Powertrain Systems
(86) Numéro de dépôt international: PCT/FR2018/052317
(87) Numéro de publication internationale: WO 2019/058070

(56) Documents cités:
- EP-A1- 1 760 357
- FR-A1- 3 041 399

## Description

L'invention a trait au domaine de la transmission de couple dans les dispositifs motorisés et concerne un dispositif d'amortissement de torsion pour une chaîne de transmission de véhicule.

Les véhicules motorisés comportent généralement de tels dispositifs d'amortissement de torsion qui peuvent être intégrés dans divers éléments la chaîne de transmission. Par exemple, un volant moteur à double volant amortisseur, un disque d'embrayage, ou un limiteur de couple, peuvent inclure un dispositif d'amortissement de torsion permettant le filtrage des acyclismes du moteur et autres oscillations de torsion. Ce filtrage est typiquement réalisé par un ou plusieurs amortisseurs de torsion qui sont des combinés ressorts-amortisseurs travaillant en torsion et permettant, au cours de la transmission du couple, un mouvement de rotation relative d'un premier élément tournant de transmission d'un couple, couplé en amont de la chaîne de transmission, et d'un deuxième élément tournant de transmission du couple, couplé en aval de la chaîne de transmission. La rotation relative peut être permise par des ressorts et l'amortissement peut être réalisé par un dispositif de frottement doté de rondelles de frottement mises en charge axiale par des rondelles élastiques, de sorte à dissiper par frottement une partie de l'énergie accumulée dans les ressorts.

Le dispositif de frottement est adapté à chaque application particulière, en fonction de la quantité d'énergie à dissiper et des phases de fonctionnement où l'on souhaite qu'il soit actif.

Lors de la conception d'un tel dispositif d'amortissement de torsion, une attention particulière est portée sur le choix, le dimensionnement, et la disposition des éléments du dispositif de frottement, pour obtenir une courbe de frottement adaptée à une application particulière.

L'invention a pour but d'améliorer les dispositifs d'amortissement de torsion de l'art antérieur en proposant un tel dispositif dans lequel le dispositif de frottement n'est actif que pendant certaines phases de fonctionnement.

A cet effet, l'invention vise un dispositif d'amortissement de torsion pour une chaîne de transmission de véhicule, comprenant :
- un premier élément tournant de transmission d'un couple doté d'un premier logement ;
- un deuxième élément tournant de transmission du couple doté d'un deuxième logement ;
- un dispositif élastique interposé entre le premier élément tournant et le deuxième élément tournant, et autorisant, lorsqu'il se déforme, une rotation relative autour d'un axe de rotation entre les premier et deuxième éléments tournants, le dispositif élastique comportant au moins un ressort qui est monté à la fois dans le premier logement et dans le deuxième logement ;
- un dispositif de frottement comportant :
   - une rondelle de frottement agencée pour frotter directement ou indirectement contre le deuxième élément tournant ;
   - un support axial solidaire en rotation du deuxième élément tournant ;
   - une rondelle élastique agencée entre le support axial et la rondelle de frottement de manière à exercer un effort axial sur la rondelle de frottement en direction du deuxième élément tournant ;
   - une rondelle d'actionnement comportant une patte d'actionnement agencée circonférenciellement entre une première extrémité dudit ressort et le premier élément tournant de façon à permettre une rotation relative entre la rondelle d'actionnement et le deuxième élément tournant lorsque la première extrémité du ressort est déplacée par le premier élément tournant, via la patte d'actionnement, en direction d'une deuxième extrémité du ressort opposée a la première extrémité ;
   - la rondelle d'actionnement étant apte à entraîner en rotation la rondelle de frottement de sorte que, lorsque la rondelle d'actionnement (32) et le deuxième élément tournant (10) tournent l'un par rapport à l'autre, la rondelle de frottement frotte directement ou indirectement contre le deuxième élément tournant.

Le dispositif d'amortissement de torsion peut comporter les caractéristiques additionnelles suivantes, seules ou en combinaison :
- la rondelle d'actionnement comporte au moins un doigt axial coopérant avec une encoche de la rondelle de frottement, pour assurer l'entrainement de la rondelle de frottement par la rondelle d'actionnement ;
- la rondelle d'actionnement et la rondelle de frottement sont montées solidaires en rotation ;
- la rondelle d'actionnement comporte au moins un doigt axial couplé avec une encoche de la rondelle de frottement ;
- si on le souhaite, un jeu circonférentiel est présent entre le doigt axial et les extrémités circonférentielles de l'encoche de la rondelle de frottement. Ainsi, on peut retarder l'entrainement de la rondelle de frottement par la rondelle d'actionnement. Le jeu circonférentiel peut être de 3 à 5 degrés ;
- la rondelle d'actionnement comporte une portion annulaire reliant la patte d'actionnement et le doigt axial, et le deuxième élément tournant comporte une surface annulaire de frottement contre laquelle est pressée la rondelle de frottement, la portion annulaire de la rondelle d'actionnement d'une part, et la rondelle élastique, le support axial, et la rondelle de frottement d'autre part étant disposés de part et d'autre de la surface annulaire de frottement du deuxième élément tournant ;
- un jeu axial est laissé entre le premier élément tournant et la portion annulaire de la rondelle d'actionnement ;
- la portion annulaire de la rondelle d'actionnement est montée entre le premier élément tournant et la surface annulaire de frottement avec un jeu axial permettant la rotation de la rondelle d'actionnement par rapport au premier élément tournant ;
- le dispositif de frottement est agencé de manière à ce que la rondelle presse la rondelle de frottement contre le deuxième élément tournant sans plaquer la portion annulaire de la rondelle d'actionnement contre le premier élément tournant. On permet ainsi un mouvement de rotation relative entre le premier élément tournant et la rondelle d'activation, de sorte que la rondelle de frottement ne soit pas entraînée par le premier élément tournant lorsque la deuxième extrémité du ressort est comprimée par le premier élément tournant en direction de la première extrémité du ressort. Ainsi le frottement généré par la rondelle de frottement n'est obtenu que pour un sens de transmission du couple, par exemple de l'arbre d'entrée de boite de vitesse en direction du moteur ;
- la portion annulaire de la rondelle d'actionnement peut être montée entre le premier élément tournant et un troisième élément tournant de transmission de couple, mobile en rotation autour de l'axe, également avec un jeu axial permettant la rotation de la rondelle d'actionnement par rapport au premier élément tournant ;
- le deuxième élément tournant comporte une rainure par laquelle doigt axial traverse le deuxième élément tournant ;
- le support axial est formé d'une collerette solidaire du deuxième élément tournant, la rondelle élastique et la rondelle de frottement étant disposées entre cette collerette et la surface annulaire de frottement du deuxième élément tournant ;
- le dispositif de frottement comporte une rondelle intercalaire intercalée entre la rondelle élastique et la rondelle de frottement ;
- le doigt axial est distant de la rondelle intercalaire ;
- la portion annulaire de la rondelle d'actionnement est agencée axialement entre le premier élément tournant et deuxième élément tournant ;
- le dispositif élastique comporte au moins deux groupes de ressorts, les ressorts étant agencés en série dans chaque groupe par l'intermédiaire d'un élément de phasage, reliant les extrémités des ressorts au sein d'un groupe de ressorts ;
- l'un parmi le premier élément tournant et le deuxième élément tournant est couplé en rotation avec un élément d'entrée de couple et l'autre parmi ces éléments est couplé en rotation avec un élément de sortie de couple.
- la rondelle d'actionnement comporte en outre une butée angulaire et le deuxième élément tournant comporte une butée complémentaire, la butée angulaire et la butée complémentaire étant agencées de sorte que la rondelle d'actionnement soit couplée en rotation au deuxième élément tournant lorsque le deuxième élément tournant comprime la première extrémité du ressort en direction de la deuxième extrémité du ressort opposée a la première extrémité. Ainsi, grâce à la butée, le frottement généré par la rondelle de frottement n'est obtenu que pour un sens de transmission du couple, par exemple de l'arbre d'entrée de boite de vitesse en direction du moteur, la butée empêchant la rondelle d'activation de tourner par rapport au deuxième élément tournant dans l'autre sens de transmission du couple, par exemple du moteur à l'arbre d'entrée de boite de vitesse ;
- un doigt axial couplant les rondelles d'actionnement et de frottement forme ladite butée angulaire et la rainure forme ladite butée complémentaire ;
- la butée angulaire est agencée sur la patte d'actionnement de la rondelle d'actionnement et la butée complémentaire est agencée sur le deuxième logement du deuxième élément tournant de sorte que la patte d'actionnement soit intercalée circonférenciellement entre la première extrémité du ressort et une face d'appui du deuxième logement ;
- dans une position angulaire de repos prise par le dispositif lorsqu'aucun couple n'est transmis, le au moins un ressort est monté dans lesdits premier et deuxième logements de sorte que ses extrémités soient en appui simultané contre d'une part une première zone d'appui du premier logement et d'autre part une deuxième zone d'appui du deuxième logement ;
- selon un mode de réalisation, le dispositif élastique comporte au moins deux ressorts, le ressort coopérant avec la patte d'actionnement de la rondelle d'actionnement étant un ressort à action décalée, un jeu circonférentiel étant laissé entre la patte d'actionnement et la première extrémité du ressort dans la position angulaire de repos du dispositif d'amortissement. Ainsi, le frottement peut être obtenu avec un « effet retard ».
- selon un mode de réalisation, le dispositif élastique comporte quatre ressorts et la rondelles d'actionnement comporte deux pattes d'actionnement et deux ressort coopèrent chacun avec une patte d'actionnement de la rondelle d'actionnement, ces deux ressorts étant un ressort à action décalée, un jeu circonférentiel étant laissé entre chaque patte d'actionnement et la première extrémité de chaque ressort à action décalée dans la position angulaire de repos du dispositif d'amortissement.

Selon un autre objet, l'invention vise un dispositif d'amortissement de torsion pour une chaîne de transmission de véhicule, comprenant :
- un premier élément tournant de transmission d'un couple ;
- un deuxième élément tournant de transmission du couple ;
- un amortisseur principal comportant au moins un ressort principal interposé entre le premier élément tournant et le deuxième élément tournant, et autorisant, lorsqu'il se déforme, une rotation relative autour d'un axe de rotation entre les premier et deuxième éléments tournants.

Le dispositif d'amortissement de torsion comporte en outre :
- un troisième élément tournant de transmission du couple monté rotatif par rapport au premier et au deuxième éléments tournants autour dudit axe de rotation ;
- un amortisseur additionnel comportant au moins un ressort additionnel monté à la fois dans le premier élément tournant et dans le troisième élément tournant ;
les deuxième et troisième éléments tournants comportant respectivement une première butée et une deuxième butée complémentaire, agencées de sorte que : lorsque le débattement angulaire entre les premier et deuxième éléments tournants est supérieur à zéro et inférieur à un seuil de débattement angulaire entre les premier et deuxième éléments tournants depuis une position angulaire relative de repos des premier et deuxième éléments tournants pour laquelle aucun couple n'est transmis, ledit au moins un ressort principal est comprimé tandis que le troisième élément tournant est couplé en rotation avec le premier élément tournant via le ressort additionnel non comprimé ; et lorsque le débattement angulaire entre les premier et deuxième éléments tournants est supérieur audit seuil, la première butée et la deuxième butée complémentaire sont en appui l'une contre l'autre, le ou moins un ressort principal étant comprimé et le au moins un ressort additionnel étant comprimé en parallèle entre le premier élément tournant et le troisième élément tournant.

Dans la description et les revendications, les termes « comprimé » ou « compression », d'une part, et « précontraint » ou « précontrainte » d'autre part, lorsqu'ils se réfèrent aux ressorts, sont employés comme suit :
- la précontrainte d'un ressort désigne le fait que ce ressort est monté dans un ou plusieurs logements qui sont plus petits que la longueur initiale du ressort, ce dernier exerçant donc, par son élasticité, une force contre les parois des logements ;
- la compression d'un ressort désigne le fait que ce ressort est comprimé par rapprochement de deux parties mobiles.

La précontrainte d'un ressort est donc effective même lorsque le dispositif d'amortissement de torsion est au repos, sans qu'aucun couple ne soit transmis. La compression d'un ressort, elle, n'a lieu qu'en cours de transmission de couple, des parties mobiles les unes par rapport aux autres, modifient la configuration des logements du ressorts et compriment celui-ci.

Un dispositif d'amortissement de torsion selon l'invention présente, pour une rotation relative des premier et deuxième éléments tournants depuis une position angulaire de repos des amortisseurs pour laquelle aucun couple n'est transmis jusqu'à une position de fin de course des amortisseurs, deux phases de fonctionnement :
- une première phase de fonctionnement pour laquelle le débattement angulaire entre le premier élément tournant et le deuxième élément tournant est inférieur audit seuil, l'amortisseur principal étant agencé pour être déformé au cours de cette première phase tandis que le troisième élément tournant est apte à être entrainé en rotation par le premier élément tournant, sans déformation du ressort additionnel, par l'intermédiaire du ressort additionnel ; et
- une deuxième phase de fonctionnement pour laquelle le couple transmis est suffisant pour que le débattement angulaire entre le premier élément tournant et le deuxième élément tournant soit supérieur audit seuil, la déformation de l'amortisseur principal se poursuivant au cours de cette deuxième phase tandis que la rotation relative entre le troisième élément tournant et le deuxième élément tournant est empêché par un appui de la première butée contre la deuxième butée complémentaire, de sorte que le couple transmis permette de déformer également le ressort additionnel et autorise une rotation relative entre d'une part le premier élément de transmission et d'autre part les deuxième et troisième éléments tournants.

Un augmentation de la raideur du dispositif d'amortissement est ainsi obtenu de manière fiable et stable lors de la deuxième phase de fonctionnement où l'amortisseur principal et l'amortisseur additionnel travaillent simultanément, tandis que seul l'amortisseur principal travaille lors de la première phase de fonctionnement.

Un tel dispositif remplace avantageusement une butée de fin de course entre les premier et deuxième éléments tournants en évitant tout choc mécanique et vibrations associées.

Cette deuxième phase de fonctionnement est particulièrement avantageuse dans le cas d'un amortisseur principal à grand débattement, par exemple à plus de 30 degrés de course angulaire d'amortissement.

Le dispositif d'amortissement de torsion peut comporter les caractéristiques additionnelles suivantes, seules ou en combinaison :
- le premier élément tournant comporte au moins un premier logement additionnel et en ce que le troisième élément tournant comporte au moins un deuxième logement additionnel, les au moins un premier et deuxième logements additionnels étant agencés axialement en vis-à-vis de sorte que le au moins un ressort additionnel soit inséré dans ces logements en vis-à-vis ;
- le premier élément tournant comporte au moins un bras s'étendant radialement et agencé circonférenciellement entre deux ressorts principaux, un desdits premiers logements additionnels étant formé sur ce bras ;
- le premier élément tournant comporte au moins un bras s'étendant radialement, un ressort principal étant en appui circonférentiel directement ou indirectement contre ce bras, un deuxième logements additionnel étant formé sur ce bras ;
- le au moins un ressort principal et le au moins un ressort additionnel sont agencés de sorte que au moins une portion du ressort additionnel se trouve radialement dans un même plan perpendiculaire audit axe qu'une portion du ressort principal. Le ressort additionnel additionnel dans son ensemble se trouve radialement dans un même plan perpendiculaire audit axe qu'une portion du ressort principal ;
- le au moins un ressort principal comporte un bord radial externe et un bord radial interne et le au moins un ressort additionnel est agencé au moins en partie dans un tore centré sur ledit axe et délimité radialement par les bords radiaux interne et externe du au moins un ressort principal ;
- l'amortisseur principal comporte au moins deux ressorts principaux et un ressort additionnel est agencé circonférenciellement entre deux ressorts principaux ;
- l'amortisseur principal comporte au moins deux groupes de ressorts principaux, les ressorts principaux étant agencés en série dans chaque groupe, et un ressort additionnel est agencé circonférenciellement entre deux groupes de ressorts principaux ;
- les ressorts principaux sont agencés en série dans chaque groupe par l'intermédiaire d'un élément de phasage, reliant dans chaque groupe deux ressorts principaux consécutifs agencés en série ;
- ledit seuil est compris entre 15 et 65 degrés, de préférence entre 25 et 50 degrés ;
- le dispositif comporte une butée angulaire de fin de course limitant le débattement angulaire relatif entre les premier et deuxième éléments tournants, et en ce que l'angle séparant ledit seuil de la position angulaire de fin de course est compris entre 3 et 15 degrés, de préférence entre 3 et 10 degrés ;
- le rapport de la raideur de l'amortisseur additionnel sur la raideur de l'amortisseur principal est compris entre 2 et 10, de préférence entre 3 et 8, par exemple 4 ou 5. Par exemple la raideur angulaire de l'amortisseur principale est d'environ 3 Nm/° et la raideur angulaire de l'amortisseur additionnel est comprise entre 12 Nm/° et 15 Nm/°, par exemple 14 Nm/° ;
- l'un parmi le premier élément tournant et le deuxième élément tournant est couplé en rotation à un disque de friction et l'autre parmi le premier élément tournant et le deuxième élément tournant est couplé en rotation avec un moyeu ;
- le troisième élément tournant comporte deux rondelles de guidage additionnelles agencées de part et d'autre du premier élément tournant et maintenant axialement les ressorts additionnels, et le deuxième élément tournant comporte deux rondelles de guidage principales maintenant axialement les ressorts principaux, chaque rondelle de guidage additionnelle étant agencée axialement entre le premier élément tournant et une rondelle de guidage principale ;
- ladite deuxième butée est formée par au moins une languette radiale disposée sur chaque rondelle de guidage additionnelle ;
- lesdites première et deuxième butées complémentaires sont agencées radialement à l'extérieur des ressorts principaux.

Un exemple préféré de réalisation de l'invention va maintenant être décrit en références aux dessins annexés dans lesquels :
- la figure 1 est une vue éclatée d'un dispositif d'amortissement de torsion comportant un dispositif d'amortissement de torsion selon l'invention ;
- la figure 2 est une vue de face du limiteur de couple de la figure 1 ;
- la figure 3 est une vue selon la coupe A-A de la figure 2 ;
- la figure 4 est une vue similaire à la figure 2, montrant l'intérieur du limiteur de couple ;
- la figure 5 est une vue selon la coupe B-B de la figure 4 ;
- la figure 6 est une vue de détail, en perspective, du dispositif d'amortissement de torsion des figures précédentes ;
- la figure 7 est une vue de face du dispositif d'amortissement de torsion des figures précédentes, en position de repos ;
- la figure 8 est un schéma de principe du fonctionnement du dispositif d'amortissement de torsion des figures précédentes ;
- la figure 9 est une courbe caractéristique du fonctionnement correspondant au schéma de la figure 8 ;
- la figure 10 est une vue similaire à la figure 7 mais dans une position de fin de course d'une première polarité de couple ;
- la figure 11 est une vue similaire à la figure 7 mais dans une position de fin de course d'une deuxième polarité de couple ;
- la figure 12 est un schéma de principe d'une variante de l'invention.

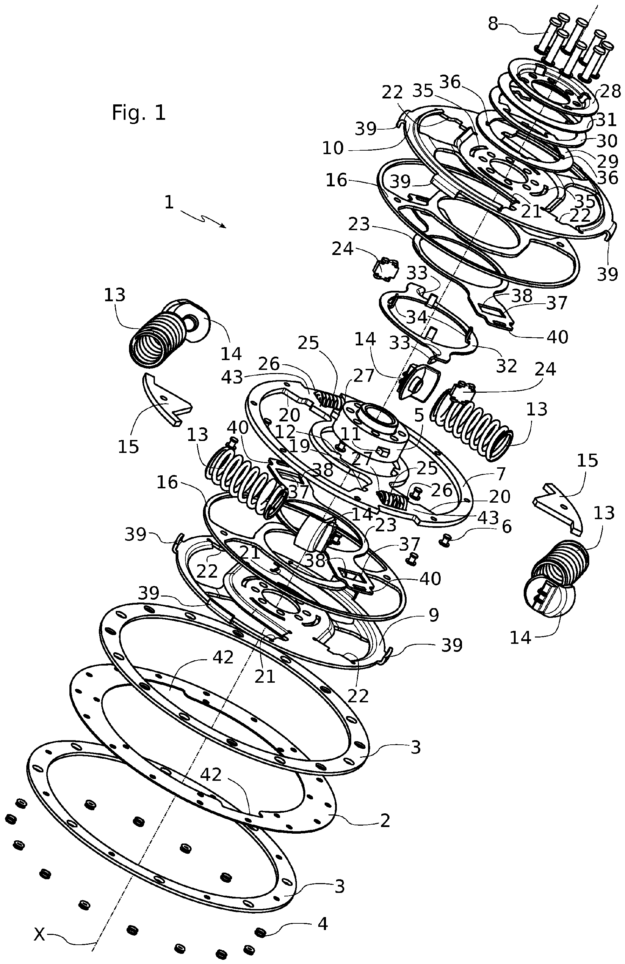

La figure 1 représente un dispositif d'amortissement de torsion, couplé à un disque de friction 2 d'un limiteur de couple (non représenté sur la figure 1) destiné, en fonctionnement normal, à transmettre un couple en tournant autour d'un axe X et à limiter cette transmission lorsque ce couple excède une certaine valeur.

Dans la description et les revendications, on utilisera, les termes "externe" et "interne" ainsi que les orientations "axiale" et "radiale" pour désigner, selon les définitions données dans la description, des éléments du dispositif d'amortissement. L'axe X de rotation détermine l'orientation "axiale". L'orientation "radiale" est dirigée orthogonalement à l'axe X. L'orientation "circonférentielle" est dirigée orthogonalement à l'axe X de rotation et orthogonalement à la direction radiale. Les termes "externe" et "interne" sont utilisés pour définir la position relative d'un composant par rapport à un autre, par référence à l'axe X de rotation, un composant proche dudit axe est ainsi qualifié d'interne par opposition à un composant externe situé radialement en périphérie. Par ailleurs, les angles et secteurs angulaires exprimés sont définis en relation avec l'axe de rotation X.

Le dispositif d'amortissement 1 comporte :
- un organe périphérique de transmission de couple constitué ici d'un disque de friction 2 de part et d'autre duquel sont fixés deux garnitures de friction 3 grâce à un premier jeu de rivets 4 ;
- un organe central de transmission de couple constitué ici d'un moyeu 5.

Le disque de friction 2 est fixé par un deuxième jeu de rivets 6 à un premier élément tournant de transmission de couple qui est ici constitué par un disque dénommé « voile » 7.

Le moyeu 5 est fixé par un troisième jeu de rivets 8 à un deuxième élément tournant de transmission de couple qui est ici constitué par une paire de disques dénommés « rondelles de guidage » 9, 10. Une première rondelle de guidage 9 est fixée contre un flanc du moyeu 5 tandis qu'une deuxième rondelle de guidage 9 est fixée contre un flanc opposé du moyeu 5. Les rondelles de guidage 9, 10 comportent chacune quatre butées angulaires 39 disposées sur le pourtour de la rondelle selon deux diamètres perpendiculaires, les quatre butées angulaires 39 de chaque rondelle de guidage 9, 10 étant disposée en vis-à-vis des quatre butées angulaires 39 de l'autre rondelle de guidage 9, 10. Les butées angulaires 39 sont réalisées par pliage de la matière des rondelles de guidage 9, 10.

Le dispositif d'amortissement comporte un dispositif d'amortissement de torsion intercalé entre le voile 7 et les rondelles de guidage 9, 10 de sorte que le voile 7 d'une part, et les rondelles de guidage 9, 10 d'autre part, puissent tourner l'un par rapport à l'autre en comprimant le dispositif d'amortissement.

Le dispositif d'amortissement 1 est destiné à être monté dans une chaîne de transmission de couple, par exemple entre un moteur et les roues d'un véhicule, de sorte que le disque de friction 2 et ses garnitures 3 soient pressées au moyen d'un disque de pression chargé élastiquement, contre un disque d'appui monté solidaire d'un volant moteur ; et de sorte que le moyeu 5 soit raccordé à un arbre de transmission. L'élément moteur entraine en rotation les garnitures de friction 3 et donc le voile 7 qui lui est solidaire. Le voile 7 comprime le dispositif d'amortissement qui transmet le couple aux rondelles de guidage 9, 10 et donc au moyeu 5 qui lui est solidaire. En transmettant le couple entre le voile 7 et les rondelles de guidage 9, 10, le dispositif d'amortissement, par ses propriétés élastiques et de frottement, filtre au passage les acyclismes et autres mouvements de torsion indésirables.

Le dispositif d'amortissement1 comporte de plus une première butée de fin de course et une deuxième butée de fin de course complémentaire permettant que le couple soit directement transmis des garnitures de friction 3 au moyeu 5, court-circuitant le dispositif d'amortissement de torsion au-delà d'un angle prédéterminé de rotation relative entre le voile 7 et les rondelles de guidage 9, 10.

La première butée de fin de course est ici constituée de dents externes 11 disposées sur le pourtour du moyeu 5 et la deuxième butée de fin de course complémentaire est ici constituée de dents internes 12 au centre du voile 7.

Le dispositif d'amortissement de torsion comporte un amortisseur principal et un amortisseur additionnel.

L'amortisseur principal comporte :
- quatre ressorts 13 agencés circonférenciellement ;
- quatre embouts 14 pour le montage de ces ressorts 13 ;
- un élément de phasage des ressorts 13 constitué de deux intercalaires 15 montées, de manière diamétralement opposée, entre deux disques de phasage 16.

Le voile 7 et les rondelles de guidage 9, 10 comportent chacun des ouvertures pour le montage des ressorts 13 définissant deux logements, chacun pour une paire de ressorts 13. Les logements du voile 7 présentent chacun une première zone d'appui 19 et une deuxième zone d'appui 20 opposée. De même, les logements de chaque rondelles de guidage 9, 10 présentent chacun une première zone d'appui 21 et une deuxième zone d'appui 20 opposée.

Le dispositif d'amortissement comporte de plus un troisième élément tournant de transmission de couple qui est, dans le présent exemple, constitué de deux rondelles de guidage additionnelles 23 identiques montées de part et d'autre du voile 7 et solidarisées par deux entretoises 24.

L'amortisseur additionnel comporte deux ressorts additionnels 25 disposés chacun dans un logement additionnel du voile 7. Le voile 7 comporte à cet effet deux bras 43 diamétralement opposés et portant chacun un de ces logements. Les ressorts principaux 13 sont montés entre les bras 43. Les rondelles de guidage additionnelles 23 comportent également des logements pour le montage des ressorts additionnels 25. Pour le montage des ressorts additionnels 25, les logements additionnels du voile 7 comportent chacun une première zone d'appui additionnelle 26 et une deuxième zone d'appui additionnelle 27, et les logements des rondelles de guidage additionnelles 23 comportent chacun une première zone d'appui additionnelle 37 et une deuxième zone d'appui additionnelle 38.

Le dispositif d'amortissement 1 comporte également un dispositif de frottement destiné à dissiper l'énergie des ressorts et à éviter les phénomènes d'oscillations. Le dispositif de frottement comporte un support axial 28 fixé contre la deuxième rondelle de guidage 10 par le troisième jeu de rivets 8. Entre le support axial 28 et la deuxième rondelle de guidage 10, sont disposées : une rondelle de frottement 29 ; une rondelle intercalaire 30 ; et une rondelle élastique 31, cette dernière appliquant une charge sur la rondelle de frottement 29 par l'intermédiaire de la rondelle intercalaire 30.

De plus, une rondelle d'actionnement 32 est prévue de l'autre coté de la deuxième rondelle de guidage 10 et comporte deux pattes d'actionnement 33 ainsi que quatre doigts axiaux 34. La rondelle d'actionnement 32 est montée de sorte que les quatre doigts axiaux 34 traversent quatre rainures 35 correspondantes pratiquées dans la deuxième rondelle de guidage 10. Les quatre doigts axiaux 34 viennent s'insérer chacun dans une encoche 36 de la rondelle de frottement 29. La rondelle d'actionnement 32 est ainsi couplée en rotation à la rondelle de frottement 29. La rondelle d'actionnement 32 est également montée contre le voile 7 de sorte que les pattes d'actionnement 33 viennent chacune en appui d'une des premières zones d'appui 19 du voile 7.

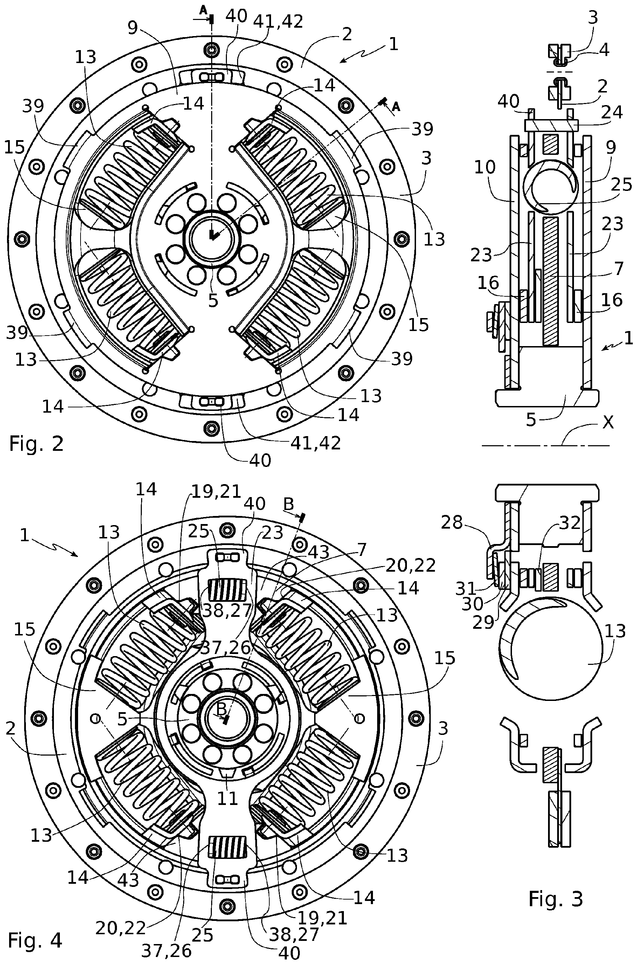

Le montage des ressorts principaux 13 est montré sur la vue de face de la figure 2. Le diamètre droit du disque 1 comporte une première paire de ressorts principaux 13 montés en série, et le diamètre droit de la figure comporte une deuxième paire de ressorts principaux 13 montés en série. Cette figure 2 montre le disque 1 à l'état de repos, c'est à dire lorsqu'il ne transmet aucun couple, ses ressorts n'étant pas sollicités. Chaque ressort 13 est monté, à une de ses extrémités, dans un embout 14 et, à l'autre de ses extrémités, contre un intercalaire 15. Chaque embout 14 est appuyé à cheval sur le voile 7 et sur les deux rondelles de guidage 9, 10, et est donc en appui sur trois zones d'appui : une zone d'appui du voile 7 et sur une zone d'appui de chaque rondelle de guidage 9, 10. Ainsi, chaque paire de ressort 13 est montée entre deux embouts 14 dont l'un s'appuie simultanément sur la première zone d'appui 19 du voile 7 et sur la première zone d'appui 21 de chaque rondelle de guidage 9, 10, et l'autre embout 14 s'appuie simultanément sur la deuxième zone d'appui 20 du voile 7 et sur la deuxième zone d'appui 22 de chaque rondelle de guidage 9, 10. Les ressorts 13 sont ainsi, par paire, précontraints entre les premières zones d'appui 19, 21 et les deuxièmes zones d'appui 20, 22. Entre les ressorts 13 de chaque paire, l'intercalaire 15, mobile en rotation autour de l'axe X grâce aux disques de phasage, assure la mise en série des ressorts 13 d'une paire, ainsi que le phasage, c'est à dire la coordination angulaire, d'une paire avec l'autre.

La vue en coupe de la figure 3 permet de voir l'empilement des pièces au sein du dispositif d'amortissement 1.

Les deux rondelles de guidage additionnelles 23 sont disposées de part et d'autre du voile 7, la rondelle d'actionnement 32 étant disposée entre le voile 7 et l'une de ces rondelles de guidage additionnelles 23.

Les disques de phasage 16 sont disposés de part et d'autre des deux rondelles de guidage additionnelles 23, tandis que les deux rondelles de guidage 9, 10 sont disposées de part et d'autre de l'ensemble. Seul le dispositif de frottement est situé axialement à l'extérieur des rondelles de guidage 9, 10, grâce au support axial 28.

La figure 4 représente le disque 1 de la figure 2 dépourvu de la première rondelle de guidage 9, laissant voir l'agencement des ressorts 13, 25, du voile 7, et de l'amortisseur additionnel 25.

Les ressorts additionnels 25 sont montés de manière similaire aux ressorts principaux 13, à cheval sur le voile 7 et les rondelles de guidage additionnelles 23. Chaque ressort additionnel 25 est ainsi précontraint entre, d'un côté, un appui simultané sur la première zone d'appui additionnelle 26 du voile 7 et sur les deux premières zones d'appui additionnelles 37 des deux rondelles de guidage additionnelles 23, et, de l'autre côté, un appui simultané sur la deuxième zone d'appui additionnelle 27 du voile 7 et sur le deux deuxièmes zones d'appui additionnelles 38 des deux rondelles de guidage additionnelles 23.

De plus, la dimension, selon la direction radiale, des logements des rondelles de guidage additionnelles 23 est légèrement inférieure à celle des logements additionnels du voile 7 de sorte qu'un ressort additionnel 25 est monté à cheval sur le voile 7 et est contenu de part et d'autre du voile 7 par les rondelles de guidage additionnelles 23.

Les rondelles de guidage additionnelles 23 comportent sur leurs extrémités radiales des languettes 40 sur lesquelles sont fixées les entretoises 24.

En référence aux figures 1 et 4, le disque de friction 2 comporte deux échancrures 41 diamétralement opposées et le voile 7 comporte deux échancrures 42 diamétralement opposées, les échancrures 41, 42 étant en vis-à-vis les unes des autres. Ces échancrures 41, 42 permettent une rotation relative des rondelles de guidage additionnelles 23 et du voile 7, de la course angulaire permise par les ressorts additionnels 25.

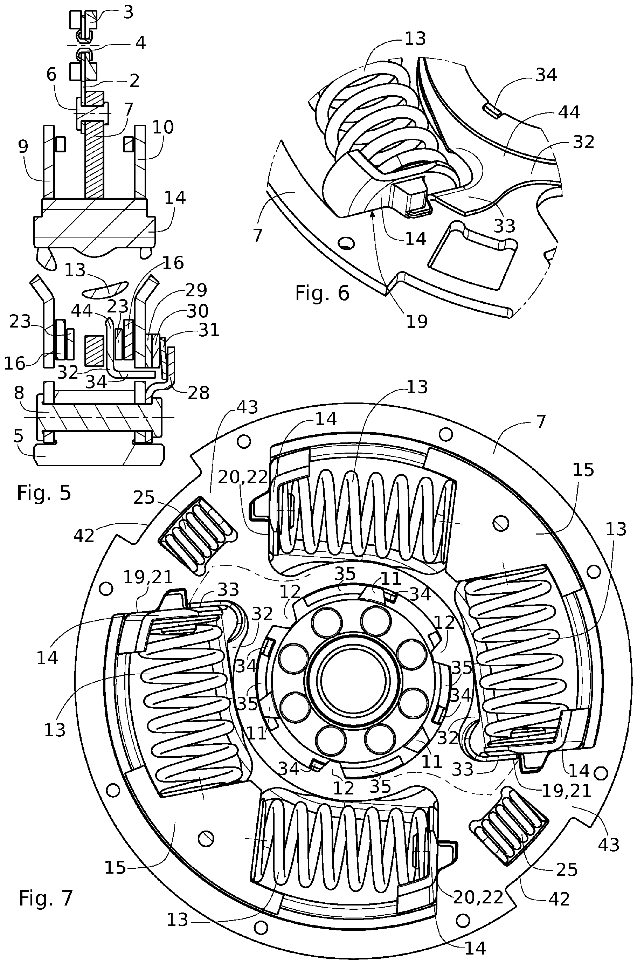

La figure 5 est une vue selon la coupe B-B de la figure 4 et montre spécifiquement l'agencement du dispositif de frottement. Cette coupe rend visible un doigt axial 34 de la rondelle d'actionnement 32 qui traverse la rondelle de guidage 10 au niveau de la rainure 35.

La rondelle d'actionnement 32 comporte une portion annulaire 44 reliant les doigts radiaux 34 et les pattes d'actionnement 33 (non visibles sur la coupe de la figure 5). La portion annulaire 44 de la rondelle d'actionnement est disposée entre le voile 7 et l'une des rondelles de guidage additionnelles 23. L'espace axial entre le voile 7 et la rondelle de guidage additionnelle 23 est supérieur à l'épaisseur de ladite portion annulaire 44 de sorte que la rondelle d'actionnement est montée avec un jeu axial 47 entre elle et le voile 9. Une rotation du voile 9 n'entrainera donc pas en rotation par friction la rondelle d'actionnement 32.

Le support axial 28 a une forme de collerette solidarisée à la rondelle de guidage 10 par le jeu de rivets 8.

La figure 6 montre en perspective une portion du voile 7 et illustre le positionnement de la rondelle d'actionnement 32 par rapport à un ressort principal 13. La rondelle d'actionnement 32 est en effet montée de sorte que la patte d'actionnement 33 soit insérée entre une extrémité du ressort 13 et une première zone d'appui 19 du voile 9. La patte d'actionnement 33 peut être directement insérée entre ces deux pièces 13, 9 ou par l'intermédiaire d'autres pièces. Dans le présent exemple, la patte d'actionnement 33 est insérée entre l'embout 14, fixé à l'extrémité du ressort 13, et la première zone d'appui 19 du voile 9. Dans cette position de la figure 6, la compression du ressort 13 bloque la rondelle d'actionnement 32 contre le voile 9.

La figure 7 représente le dispositif d'amortissement de torsion 1 dépourvu, pour simplifier la figure, des rondelles de guidage additionnelles 23, des disques 2, 3, et de la première rondelle de guidage 9. Le voile 7 apparait donc au premier plan avec les ressorts principaux 13 et les ressorts additionnels 25 montés dans leurs logements respectifs. Derrière le voile 9 se trouvent, dans l'ordre, la rondelle d'actionnement 32, la rondelle de guidage additionnelle 23, un disque de phasage 16, la deuxième rondelle de guidage 10, et le dispositif de frottement.

Sur la figure 7, la portion annulaire de la rondelle d'actionnement 32 est cachée par le voile 9 mais les deux pattes d'actionnement 33 sont visibles, insérée entre les premières zones d'appui 19 du voile 9 et l'extrémité des ressorts 13, par l'intermédiaire des embouts 14. Les portions des patte d'actionnement 33 qui sont cachées par le voile 9 sont représentées en pointillés.

Dans cette position de la figure 7, le dispositif d'amortissement de torsion 1 est dans une position angulaire de repos pour laquelle aucun couple n'est transmis et où, par conséquent, les ressorts 13, 25 ne sont pas sollicités. Cette position angulaire de repos est la position initiale à partir de laquelle sont caractérisées :
- une première polarité de couple définie par le fait que le voile 7 se trouve dans une position angulaire, par rapport aux rondelles de guidage 9, 10, qui est située dans un secteur angulaire compris entre la position angulaire de repos et une position de fin de course où le voile 7 est tourné au maximum dans le sens anti-horaire jusqu'à la mise en butée des dents 11, 12 ;
- une deuxième polarité de couple définie par le fait que le voile 7 se trouve dans une position angulaire, par rapport aux rondelles de guidage 9, 10, qui est située dans un secteur angulaire compris entre la position angulaire de repos et une position de fin de course où le voile 7 est tourné au maximum dans le sens horaire, jusqu'à la mise en butée des dents 11, 12.

Ces deux polarités de couple correspondent à deux modes de fonctionnement du dispositif d'amortissement de torsion 1 :
- un mode où le couple est transmis de l'élément central de transmission de couple vers l'élément périphérique de transmission de couple, correspondant par exemple, dans un véhicule, à une transmission du couple des roues vers le moteur (phases de frein moteur, par exemple) couramment dénommé « mode rétro » ;
- un mode où le couple est transmis de l'élément périphérique de transmission de couple vers l'élément central de transmission de couple, correspondant par exemple, dans un véhicule à une transmission du couple du moteur vers les roues (phases d'accélération, par exemple) couramment dénommé « mode direct ».

Selon que le dispositif d'amortissement de torsion 1 travaille selon l'une ou l'autre de ces polarités de couple, le fonctionnement du dispositif de frottement est différent.

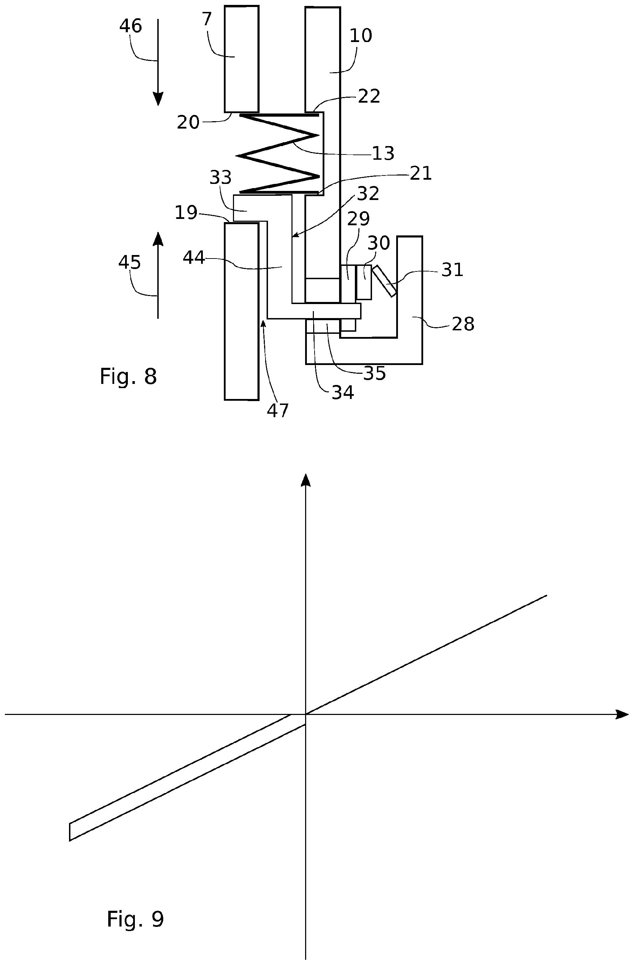

La figure 8 est un schéma de principe illustrant le fonctionnement du dispositif de frottement du dispositif d'amortissement de torsion 1. La numérotation des pièces de cette figure reprends celle des éléments qu'elle prétend schématiser. Le voile 7 et la deuxième rondelle de guidage 10, sont ainsi représentées par deux pièces verticales disposées face à face. La rotation relative entre le voile 7 et les rondelles de guidage 9, 10 est schématisé sur ce dessin par un déplacement relatif selon un axe vertical des pièces 7, 10.

Le voile 7 comporte un logement pour le ressort principal 13, muni d'une première zone d'appui 19 et d'une deuxième zone d'appui 20. De même la rondelle de guidage 10 comporte un logement pour le même ressort principal 13, muni d'une première zone d'appui 21 et d'une deuxième zone d'appui 22. Une patte d'actionnement 33 d'une rondelle d'actionnement 32 est serrée entre le ressort 13 et la première zone d'appui 19 du voile 7. Le doigt axial 34 relie la rondelle d'actionnement 32 et la rondelle de frottement 29 qui est disposée contre la rondelle intercalaire 30 chargée axialement par la rondelle élastique 31.

Lorsque le dispositif d'amortissement de torsion est sollicité selon la première polarité de couple, cela équivaut, sur le schéma de principe de la figure 8, à un mouvement du voile 7 selon la flèche 45, la rondelle de guidage 10 restant fixe. Le voile 7 entraine alors, par sa première zone d'appui 19, la patte d'actionnement 33 et comprime le ressort 13 contre la deuxième zone d'appui 22 de la rondelle de guidage 10. L'amortisseur principal est alors en service, par la compression des ressorts 13, de même que le dispositif de frottement puisque le déplacement de la patte d'actionnement 33 entraine le déplacement de la rondelle de frottement 29, qui frotte donc sur la rondelle de guidage 10 et sur la rondelle intercalaire 30.

À l'inverses, lorsque le dispositif d'amortissement de torsion est sollicité selon la deuxième polarité de couple, cela équivaut à un mouvement du voile 7 selon la flèche 46, la rondelle de guidage 10 restant fixe. Le voile 7 comprime alors, par sa deuxième zone d'appui 20, le ressort 13. L'amortisseur principal est alors en service, par la compression des ressorts 13, mais le dispositif de frottement, quant à lui, n'est pas en service puisque la patte d'actionnement 33 n'est pas entraînée. Le ressort est en effet comprimé entre la deuxième zone d'appui 20 du voile 7 et la première zone d'appui 21 de la rondelle de guidage 10. La première zone d'appui 19 du voile s'éloigne alors de la patte d'actionnement 33 de la rondelle d'actionnement 32. Comme la rondelle d'actionnement 32 n'est pas entraînée, elle reste en place grâce au serrage de la rondelle de frottement 29 qui la maintient via le doigt axial 34. Le jeu 47, présent entre la portion annulaire de la rondelle d'actionnement 32 et le voile 7, permet à la rondelle d'actionnement 32 de ne pas être entraînée par friction par le mouvement du voile 9.

Selon la première polarité de couple, le dispositif de frottement est ainsi activé, tandis qu'il n'est pas activé selon la deuxième polarité de couple.

La figure 9 illustre l'évolution du couple de rappel (en ordonnée) exercé par le dispositif d'amortissement de torsion en fonction de l'angle de rotation relative (en abscisse) entre le voile 7 et les rondelles de guidage 9, 10. La courbe dans le cadran inférieure gauche de la figure représente l'évolution du couple de rappel lorsque le dispositif d'amortissement de torsion travaille selon la première polarité de couple, et la courbe dans le cadran supérieur droit représente l'évolution du couple lorsque le dispositif d'amortissement de torsion travaille selon la deuxième polarité de couple. L'origine du repère correspond à la position angulaire de repos de la figure 7.

Selon la première polarité de couple (cadran inférieure gauche), le dispositif de frottement est actif et la courbe prends sensiblement, sur la figure 9, la forme de deux droites parallèles. La pente des droites est représentative de la raideur des ressorts 13. Le fait qu'il y ait deux droites illustre la dissipation d'énergie lors de l'aller (de la position angulaire de repos vers la position de fin de course) et lors du retour (de la position de fin de course vers la position angulaire de repos), cette dissipation d'énergie étant provoquée par le dispositif de frottement qui est donc activé.

Selon la deuxième polarité de couple (cadran supérieur droit), le dispositif de frottement est inactif et la courbe prends donc sensiblement la forme d'une seule droite car, sans dissipation d'énergie par frottement, la courbe est identique pour l'aller (de la positon angulaire de repos vers la position de fin de course) et pour le retour (de la position de fin de course vers la position angulaire de repos).

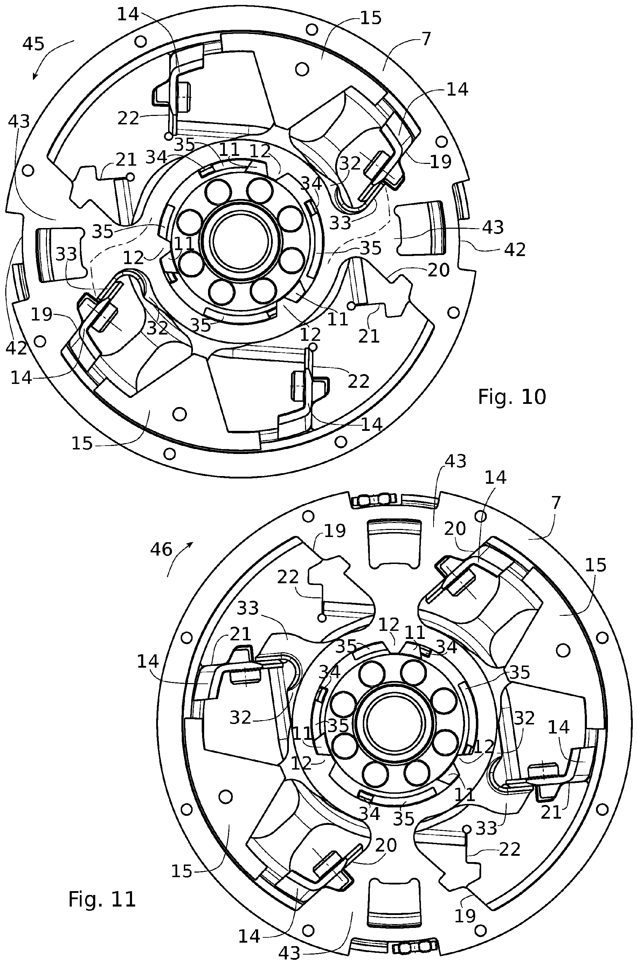

Les figures 10 et 11 illustrent l'application concrète, au sein du dispositif d'amortissement de torsion 1, des principes qui viennent d'être exposés. Ces figures sont dépourvues de certains éléments, comme la figure 7, et également des ressorts, pour plus de clarté.

La figure 10 est relative au disque 1 dans la première polarité de couple. Par rapport à la position angulaire de repos de la figure 7, le voile 7 a tourné dans le sens anti-horaire jusqu'à sa position de fin de course (flèche 45). Dans cette position, les ressorts principaux 13 sont comprimés entre les premières zones d'appui 19 du voile 7 et les deuxièmes zones d'appui 22 des rondelles de guidage 9, 10. Les patte d'actionnement 33 des rondelle d'actionnement 32 sont entraînées avec le voile 7 dans cette rotation via les premières zones d'appui 19. La portion des patte d'actionnement 33 cachée par le voile 7 est représentée en pointillés.

En conséquence, quand le dispositif d'amortissement de torsion 1 travaille dans le secteur angulaire relatif de la première polarité de couple, la rondelle d'actionnement 32 est entraînée en rotation, ce qui entraîne le frottement de la rondelle de frottement 29 et donc l'activation du dispositif de frottement.

La figure 11 est relative au disque 1 dans la deuxième polarité de couple. Par rapport à la position angulaire de repos de la figure 7, le voile 7 a maintenant tourné dans le sens horaire jusqu'à sa position de fin de course (flèche 46). Dans cette position, les ressorts principaux 13 sont comprimés entre les deuxièmes zones d'appui 20 du voile 7 et les premières zones d'appui 21 des rondelles de guidage 9, 10. Les premières zones d'appui 19 du voile 7 s'écartent des patte d'actionnement 33 et la rondelle d'actionnement 32 n'est donc pas entraînée en rotation.

En conséquence, quand le dispositif d'amortissement de torsion 1 travaille dans le secteur angulaire relatif de la deuxième polarité de couple, la patte d'actionnement 33 reste en place et la rondelle d'actionnement 32 n'est pas entraînée en rotation, le dispositif de frottement n'est donc pas activé.

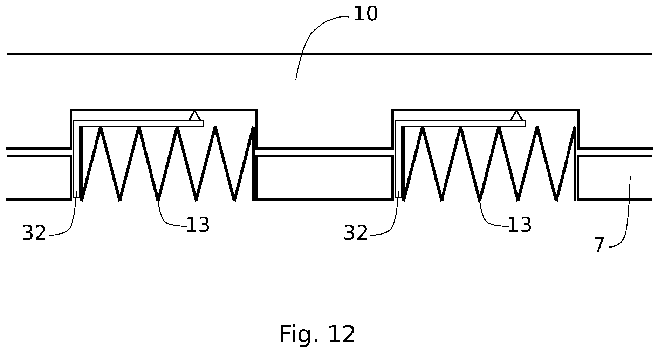

La figure 12 est relative à une variante du dispositif d'amortissement de torsion qui vient d'être décrit. Ce schéma de principe représente une dispositif d'amortissement vu par la tranche et montre la coopération d'une rondelle de guidage 10 avec un voile 7 et deux ressorts principaux 13 coopérant chacun avec une rondelle d'actionnement 32.

Selon cette variante, la patte d'actionnement 33 de chaque rondelle d'actionnement 32 vient se positionner, non seulement entre le ressort 13 et le voile 7, mais aussi entre le ressort 13 et la rondelle de guidage 10. Par ailleurs, selon cette variante, les rondelle d'actionnement 32 viennent frotter directement sur la rondelle de guidage 10.

Conformément à l'invention, le dispositif d'amortissement de torsion selon cette variante permet d'entrainer la rondelle d'actionnement 32, et donc de provoquer du frottement, lors du fonctionnement selon une première polarité de couple, et permet de ne pas entraîner cette rondelle lors du fonctionnement selon la polarité de couple opposée D'autres variantes de réalisation du dispositif d'amortissement de torsion peuvent être mises en oeuvre sans sortir du cadre de l'invention. Par exemple, le système dans lequel le dispositif d'amortissement de torsion est monté peut être un quelconque système au sein d'une chaîne de transmission de couple qui nécessite un amortissement de torsion, tels qu'un disque d'embrayage, ou un double volant amortisseur.

Les fonctions de l'amortisseur principal et de l'amortisseur secondaire peuvent être assurées par un seul ressort ou par un nombre quelconque de ressorts, éventuellement en série ou en parallèle.

La butée des rondelles de guidage supplémentaires sur le deuxième élément tournant peut être réalisée différemment, par exemple par d'autres butées disposées près du centre du disque.

Les rôles du voile et des rondelles de guidage peuvent être inversés, le voile devenant le deuxième élément tournant et les rondelles de guidage devenant le premier élément tournant.

En variante, la patte d'actionnement 33 de la rondelle d'actionnement 32 peut également être montée à cheval entre le voile 7 et la rondelle de guidage 9.

Le support axial 28 peut également être fait d'une seule pièce avec la rondelle de guidage 10.

## Revendications

1. Dispositif d'amortissement de torsion pour une chaîne de transmission de véhicule, comprenant :
- un premier élément tournant (7) de transmission d'un couple doté d'un premier logement ;
- un deuxième élément tournant (9, 10) de transmission du couple doté d'un deuxième logement ;
- un dispositif élastique interposé entre le premier élément tournant (7) et le deuxième élément tournant (9, 10), et autorisant, lorsqu'il se déforme, une rotation relative autour d'un axe de rotation (X) entre les premier (7) et deuxième (9, 10) éléments tournants, le dispositif élastique comportant au moins un ressort (13) qui est monté à la fois dans le premier logement et dans le deuxième logement ;
- un dispositif de frottement comportant :
• une rondelle de frottement (29) agencée pour frotter directement contre le deuxième élément tournant (10) ;
• un support axial (28) solidaire en rotation du deuxième élément tournant (10) ;
• une rondelle élastique (31) agencée entre le support axial (28) et la rondelle de frottement (29) de manière à exercer un effort axial sur la rondelle de frottement (29) en direction du deuxième élément tournant (10) ;
• une rondelle d'actionnement (32) comportant une patte d'actionnement (33) agencée circonférenciellement entre une première extrémité dudit ressort (13) et le premier élément tournant (7) de façon à permettre une rotation relative entre la rondelle d'actionnement (32) et le deuxième élément tournant (10) lorsque la première extrémité du ressort (13) est déplacée par le premier élément tournant (7), via la patte d'actionnement, en direction d'une deuxième extrémité du ressort (13) opposée a la première extrémité,
• la rondelle d'actionnement étant apte à entraîner en rotation la rondelle de frottement de sorte que, lorsque la rondelle d'actionnement (32) et le deuxième élément tournant (10) tournent l'un par rapport à l'autre, la rondelle de frottement frotte directement contre le deuxième élément tournant.

2. Dispositif selon la revendication 1, **caractérisé en ce que** la rondelle d'actionnement (32) comporte au moins un doigt axial (34) coopérant avec une encoche (36) de la rondelle de frottement (29), pour assurer l'entrainement de la rondelle de frottement (29) par la rondelle d'actionnement (32).

3. Dispositif selon la revendication 2, **caractérisé en ce que** la rondelle d'actionnement (32) comporte une portion annulaire (44) reliant la patte d'actionnement (33) et le doigt axial (34), et le deuxième élément tournant (10) comporte une surface annulaire de frottement contre laquelle est pressée la rondelle de frottement (29), la portion annulaire (44) de la rondelle d'actionnement (32) d'une part, et la rondelle élastique (31), le support axial (28), et la rondelle de frottement (29) d'autre part étant disposés de part et d'autre de la surface annulaire de frottement du deuxième élément tournant (10).

4. Dispositif selon la revendication 3, **caractérisé en ce que** la portion annulaire (44) de la rondelle d'actionnement (32) est montée entre le premier élément tournant (7) et la surface annulaire de frottement avec un jeu axial (47) permettant la rotation de la rondelle d'actionnement par rapport au premier élément tournant (7).

5. Dispositif selon les revendications 3 et 4, **caractérisé en ce que** le deuxième élément tournant (10) comporte une rainure (35) par laquelle doigt axial (34) traverse le deuxième élément tournant (10).

6. Dispositif selon les revendications 3 à 5, **caractérisé en ce que** le support axial (28) est formé d'une collerette solidaire du deuxième élément tournant (10), la rondelle élastique (31) et la rondelle de frottement (29) étant disposées entre cette collerette et la surface annulaire de frottement du deuxième élément tournant (10).

7. Dispositif selon l'une des revendications précédentes, **caractérisé en ce que** le dispositif de frottement comporte une rondelle intercalaire (30) intercalée entre la rondelle élastique (31) et la rondelle de frottement (29).

8. Dispositif selon l'une des revendications 3 à 7, **caractérisé en ce que** la portion annulaire (44) de la rondelle d'actionnement (32) est agencée axialement entre le premier élément tournant (7) et deuxième élément tournant (10).

9. Dispositif selon l'une des revendications précédentes, **caractérisé en ce que** le dispositif élastique comporte au moins deux groupes de ressorts (13), les ressorts étant agencés en série dans chaque groupe par l'intermédiaire d'un élément de phasage (15, 16), reliant les extrémités des ressorts (13) au sein d'un groupe de ressorts.

10. Dispositif selon l'une des revendications précédentes, **caractérisé en ce que** l'un parmi le premier élément tournant (7) et le deuxième élément tournant (9, 10) est couplé en rotation avec un élément d'entrée de couple et l'autre parmi ces éléments est couplé en rotation avec un élément de sortie de couple.

11. Dispositif selon l'une des revendications précédentes, **caractérisé en ce que** la rondelle d'actionnement (32) comporte en outre une butée angulaire et le deuxième élément tournant (10) comporte une butée complémentaire, la butée angulaire et la butée complémentaire étant agencées de sorte que la rondelle d'actionnement (32) soit couplée en rotation au deuxième élément tournant (10) lorsque le deuxième élément tournant comprime la première extrémité du ressort en direction de la deuxième extrémité du ressort opposée a la première extrémité.

12. Dispositif selon la revendication 11, **caractérisé en ce qu'**un doigt axial (34) couplant les rondelles d'actionnement (32) et de frottement (29) forme ladite butée angulaire et la rainure (35) forme ladite butée complémentaire.

13. Dispositif selon l'une des revendications 11 ou 12, **caractérisé en ce que** la butée angulaire est agencée sur la patte d'actionnement (33) de la rondelle d'actionnement (32) et la butée complémentaire est agencée sur le deuxième logement du deuxième élément tournant (10) de sorte que la patte d'actionnement (33) soit intercalée circonférenciellement entre la première extrémité du ressort (13) et une face d'appui du deuxième logement.

14. Dispositif selon l'une des revendications précédentes, **caractérisé en ce que**, dans une position angulaire de repos prise par le dispositif lorsqu'aucun couple n'est transmis, le au moins un ressort (13) est monté dans lesdits premier et deuxième logements de sorte que ses extrémités soient en appui simultané contre d'une part une première zone d'appui (19) du premier logement et d'autre part une deuxième zone d'appui (21) du deuxième logement.

## Patentansprüche

1. Torsionsdämpfervorrichtung für einen Antriebsstrang eines Fahrzeugs, beinhaltend:
- ein erstes Drehelement (7) zur Übertragung eines Drehmoments, das über eine erste Aufnahme verfügt;
- ein zweites Drehelement (9, 10) zur Übertragung des Drehmoments, das über eine zweite Aufnahme verfügt;
- eine elastische Vorrichtung, die zwischen dem ersten Drehelement (7) und dem zweiten Drehelement (9, 10) eingefügt ist und, wenn sie sich verformt, eine relative Drehung um eine Drehachse (X) zwischen dem ersten (7) und dem zweiten (9, 10) Drehelement gestattet, wobei die elastische Vorrichtung mindestens eine Feder (13) umfasst, die sowohl in der ersten Aufnahme als auch in der zweiten Aufnahme montiert ist;
- eine Reibungsvorrichtung, die Folgendes umfasst:
• eine Reibscheibe (29), die dazu angeordnet ist, direkt gegen das zweite Drehelement (10) zu reiben;
• eine axiale Halterung (28), die drehfest mit dem zweiten Drehelement (10) verbunden ist;
• eine Federscheibe (31), die zwischen der axialen Halterung (28) und der Reibscheibe (29) angeordnet ist, sodass sie eine axiale Kraft auf die Reibscheibe (29) in Richtung des zweiten Drehelements (10) ausübt;
• eine Betätigungsscheibe (32), die eine Betätigungslasche (33) umfasst, die in Umfangsrichtung zwischen einem ersten Ende der Feder (13) und dem ersten Drehelement (7) angeordnet ist, sodass sie eine relative Drehung zwischen der Betätigungsscheibe (32) und dem zweiten Drehelement (10) gestattet, wenn das erste Ende der Feder (13) durch das erste Drehelement (7) mittels der Betätigungslasche in Richtung eines zweiten Endes der Feder (13), das dem ersten Ende gegenüberliegt, verschoben wird,
• wobei die Betätigungsscheibe dazu in der Lage ist, die Reibscheibe drehend mitzunehmen, sodass, wenn sich die Betätigungsscheibe (32) und das zweite Drehelement (10) mit Bezug zueinander drehen, die Reibscheibe direkt gegen das zweite Drehelement reibt.

2. Vorrichtung nach Anspruch 1, **dadurch gekennzeichnet, dass** die Betätigungsscheibe (32) mindestens einen axialen Finger (34) umfasst, der mit einer Einkerbung (36) der Reibscheibe (29) zusammenwirkt, um die Mitnahme der Reibscheibe (29) durch die Betätigungsscheibe (32) zu gewährleisten.

3. Vorrichtung nach Anspruch 2, **dadurch gekennzeichnet, dass** die Betätigungsscheibe (32) einen ringförmigen Abschnitt (44) umfasst, der die Betätigungslasche (33) und den axialen Finger (34) verbindet, und das zweite Drehelement (10) eine ringförmige Reiboberfläche umfasst, gegen die die Reibscheibe (29) gedrückt wird, wobei der ringförmige Abschnitt (44) der Betätigungsscheibe (32) einerseits und die Federscheibe (31), die axiale Halterung (28) und die Reibscheibe (29) andererseits zu beiden Seiten der ringförmigen Reiboberfläche des zweiten Drehelements (10) eingerichtet sind.

4. Vorrichtung nach Anspruch 3, **dadurch gekennzeichnet, dass** der ringförmige Abschnitt (44) der Betätigungsscheibe (32) mit einem axialen Spiel (47) zwischen dem ersten Drehelement (7) und der ringförmigen Reiboberfläche montiert ist, was die Drehung der Betätigungsscheibe mit Bezug auf das erste Drehelement (7) gestattet.

5. Vorrichtung nach den Ansprüchen 3 und 4, **dadurch gekennzeichnet, dass** das zweite Drehelement (10) eine Nut (35) umfasst, durch die der axiale Finger (34) das zweite Drehelement (10) durchquert.

6. Vorrichtung nach den Ansprüchen 3 bis 5, **dadurch gekennzeichnet, dass** die axiale Halterung (28) aus einem Flansch gebildet ist, der fest mit dem zweiten Drehelement (10) verbunden ist, wobei die Federscheibe (31) und die Reibscheibe (29) zwischen diesem Flansch und der ringförmigen Reiboberfläche des zweiten Drehelements (10) eingerichtet sind.

7. Vorrichtung nach einem der vorhergehenden Ansprüche, **dadurch gekennzeichnet, dass** die Reibungsvorrichtung eine Zwischenlegscheibe (30) umfasst, die zwischen der Federscheibe (31) und der Reibscheibe (29) eingelegt ist.

8. Vorrichtung nach einem der Ansprüche 3 bis 7, **dadurch gekennzeichnet, dass** der ringförmige Abschnitt (44) der Betätigungsscheibe (32) axial zwischen dem ersten Drehelement (7) und dem zweiten Drehelement (10) angeordnet ist.

9. Vorrichtung nach einem der vorhergehenden Ansprüche, **dadurch gekennzeichnet, dass** die elastische Vorrichtung mindestens zwei Gruppen von Federn (13) umfasst, wobei die Federn in jeder Gruppe mittels eines Phasenelements (15, 16), das die Enden der Federn (13) innerhalb einer Gruppe von Federn verbindet, in Reihe angeordnet sind.

10. Vorrichtung nach einem der vorhergehenden Ansprüche, **dadurch gekennzeichnet, dass** eines von dem ersten Drehelement (7) und dem zweiten Drehelement (9, 10) mit einem Drehmomenteingangselement drehgekoppelt ist und das andere von diesen Elementen mit einem Drehmomentausgangselement drehgekoppelt ist.

11. Vorrichtung nach einem der vorhergehenden Ansprüche, **dadurch gekennzeichnet, dass** die Betätigungsscheibe (32) ferner einen Winkelanschlag umfasst und das zweite Drehelement (10) einen komplementären Anschlag umfasst, wobei der Winkelanschlag und der komplementäre Anschlag so angeordnet sind, dass die Betätigungsscheibe (32) mit dem zweiten Drehelement (10) drehgekoppelt ist, wenn das zweite Drehelement das erste Ende der Feder in Richtung des zweiten Endes der Feder, das dem ersten Ende gegenüberliegt, komprimiert.

12. Vorrichtung nach Anspruch 11, **dadurch gekennzeichnet, dass** ein axialer Finger (34), der die Betätigungsscheibe (32) und die Reibscheibe (29) koppelt, den Winkelanschlag bildet und die Nut (35) den komplementären Anschlag bildet.

13. Vorrichtung nach einem der Ansprüche 11 oder 12, **dadurch gekennzeichnet, dass** der Winkelanschlag an der Betätigungslasche (33) der Betätigungsscheibe (32) angeordnet ist und der komplementäre Anschlag an der zweiten Aufnahme des zweiten Drehelements (10) angeordnet ist, sodass die Betätigungslasche (33) in Umfangsrichtung zwischen dem ersten Ende der Feder (13) und einer Anlagefläche der zweiten Aufnahme eingefügt ist.

14. Vorrichtung nach einem der vorhergehenden Ansprüche, **dadurch gekennzeichnet, dass** in einer Winkelruheposition, die von der Vorrichtung eingenommen wird, wenn kein Drehmoment übertragen wird, die mindestens eine Feder (13) so in der ersten und der zweiten Aufnahme montiert ist, dass ihre Enden gleichzeitig an einerseits einem ersten Anlagebereich (19) der ersten Aufnahme und andererseits einem zweiten Anlagebereich (21) der zweiten Aufnahme anliegen.

## Claims

1. A torsion damping device for a vehicle drivetrain, comprising :
- a first rotary torque-transmission element (7) provided with a first housing;
- a second rotary torque-transmission element (9, 10) provided with a second housing;
- an elastic device interposed between the first rotary element (7) and the second rotary element (9, 10) and, when it deforms, allowing relative rotation of the first (7) and second (9, 10) rotary elements about an axis of rotation (X), the elastic device comprising at least one spring (13) which is mounted both in the first housing and in the second housing;
- a friction device comprising:
• a friction washer (29) arranged to rub directly against the second rotary element (10);
• an axial support (28) which in terms of rotation is solid with the second rotary element (10);
• an elastic washer (31) arranged between the axial support (28) and the friction washer (29) so as to exert an axial force on the friction washer (29) in the direction of the second rotary element (10);
• an actuating washer (32) comprising an actuating tab (33) arranged circumferentially between a first end of said spring (13) and the first rotary element (7) so as to allow relative rotation between the actuating washer (32) and the second rotary element (10) when the first end of the spring (13) is moved by the first rotary element (7), via the actuating tab, in the direction of a second end of the spring (13) that is opposite to the first end,
• the actuating washer being able to drive the friction washer in rotation so that when the actuating washer (32) and the second rotary element (10) are rotating one with respect to the other, the friction washer rubs directly against the second rotary element.

2. The device as claimed in claim 1, **characterized in that** the actuating washer (32) comprises at least one axial finger (34) collaborating with a notch (36) of the friction washer (29) so as to allow the friction washer (29) to be driven by the actuating washer (32).

3. The device as claimed in claim 2, **characterized in that** the actuating washer (32) comprises an annular portion (44) connecting the actuating tab (33) and the axial finger (34), and the second rotary element (10) comprises an annular friction surface against which the friction washer (29) is pressed, the annular portion (44) of the actuating washer (32), on the one hand, and the elastic washer (31), the axial support (28) and the friction washer (29), on the other hand, being positioned on the one side and on the other side of the annular friction surface of the second rotary element (10).

4. The device as claimed in claim 3, **characterized in that** the annular portion (44) of the actuating washer (32) is mounted between the first rotary element (7) and the annular friction surface with an axial clearance (47) that allows the actuating washer to rotate with respect to the first rotary element (7).

5. The device as claimed in claims 3 and 4, **characterized in that** the second rotary element (10) comprises a slot (35) via which axial finger (34) passes through the second rotary element (10).

6. The device as claimed in claims 3 to 5, **characterized in that** the axial support (28) is formed of an annular flange secured to the second rotary element (10), the elastic washer (31) and the friction washer (29) being positioned between this annular flange and the annular friction surface of the second rotary element (10).

7. The device as claimed in one of the preceding claims, **characterized in that** the friction device comprises an intermediary washer (30) interposed between the elastic washer (31) and the friction washer (29).

8. The device as claimed in one of claims 3 to 7, **characterized in that** the annular portion (44) of the actuating washer (32) is arranged axially between the first rotary element (7) and the second rotary element (10).

9. The device as claimed in one of the preceding claims, **characterized in that** the elastic device comprises at least two groups of springs (13), the springs being arranged in series in each group by means of a phasing element (15, 16) connecting the ends of the springs (13) within a group of springs.

10. The device as claimed in one of the preceding claims, **characterized in that**, of the first rotary element (7) and the second rotary element (9, 10), one is coupled in rotation with a torque input element and the other of these elements is coupled in rotation with a torque output element.

11. The device as claimed in one of the preceding claims, **characterized in that** the actuating washer (32) further comprises an angular stop and the second rotary element (10) comprises a complementary stop, the angular stop and the complementary stop being arranged in such a way that the actuating washer (32) is coupled in rotation with the second rotary element (10) when the second rotary element compresses the first end of the spring in the direction of the second end of the spring opposite to the first end.

12. The device as claimed in claim 11, **characterized in that** an axial finger (34) coupling the actuating washer (32) and friction washer (29) forms said angular stop and the slot (35) forms said complementary stop.

13. The device as claimed in one of the claims 11 and 12, **characterized in that** the angular stop is arranged on the actuating tab (33) of the actuating washer (32) and the complementary stop is arranged on the second housing of the second rotary element (10) so that the actuating tab (33) is interposed circumferentially between the first end of the spring (13) and a bearing face of the second housing.

14. The device as claimed in one of the preceding claims, **characterized in that**, in an angular position of rest adopted by the device when no torque is being transmitted, the at least one spring (13) is mounted in said first and second housings in such a way that its ends bear simultaneously against, on the one hand, a first bearing zone (19) of the first housing and, on the other hand, a second bearing zone (21) of the second housing.
